# FASCICULE DE BREVET EUROPEEN

(11) **EP 4 097 003 B1**
(45) Date de publication et mention de la délivrance du brevet: **13.03.2024**
(21) Numéro de dépôt: 21701327.5
(22) Date de dépôt: 26.01.2021
(51) Int. Cl.: B64C 1/14

(54) **PORTE D'AÉRONEF COMPORTANT UN MÉCANISME D'EMBRAYAGE ENTRE UN LEVIER EXTERNE D'OUVERTURE/FERMETURE ET UN LEVIER INTERNE D'OUVERTURE/FERMETURE**
FLUGZEUGTÜR MIT EINEM KUPPLUNGSMECHANISMUS ZWISCHEN EINEM EXTERNEN ÖFFNUNGS-/SCHLIESSHEBEL UND EINEM INNEREN ÖFFNUNGS-/SCHLIESSHEBEL
AIRCRAFT DOOR INCLUDING A CLUTCH MECHANISM BETWEEN AN EXTERNAL OPENING / CLOSING LEVER AND AN INTERNAL OPENING / CLOSING LEVER

(30) Priorité: 29.01.2020 FR 2000884
(43) Date de publication de la demande: 07.12.2022
(73) Titulaire: Latecoere, 31500 Toulouse (FR)
(72) Inventeur: ROUZADE, Emmanuel, 31660 BESSIERES (FR); DUBOSC, Grégory, 82170 GIROLLES OCCITANIE (FR)
(74) Mandataire: Junca, Eric
(86) Numéro de dépôt international: PCT/EP2021/051672
(87) Numéro de publication internationale: WO 2021/151859

(56) Documents cités:
- US-A- 4 106 729
- US-A- 4 470 566
- US-A- 5 156 359
- US-A- 5 636 814
- US-A- 6 059 231
- US-A- 6 116 542

## Description

### DOMAINE TECHNIQUE

L'invention concerne le domaine de l'aéronautique et concerne plus particulièrement les moyens d'ouverture et de fermeture des portes d'aéronef.

Certaines portes d'aéronef, par exemple les portes d'accès à la cabine, sont munies d'un levier externe d'ouverture/fermeture permettant d'actionner la porte depuis l'extérieur de l'aéronef, et d'un levier interne d'ouverture/fermeture permettant d'actionner la porte depuis l'intérieur de la cabine. Ces deux leviers actionnent généralement un seul mécanisme permettant l'ouverture et la fermeture, ainsi que le verrouillage et le déverrouillage de la porte. Dans ce cas, un mécanisme d'embrayage est généralement prévu pour coupler le levier externe d'ouverture/fermeture au levier interne d'ouverture/fermeture et permettre, lors de certaines phases d'actionnement de la porte, d'entrainer en rotation l'un des leviers conjointement à la rotation de l'autre levier.

### ART ANTÉRIEUR

Les portes d'aéronef actuellement utilisées comportent un levier externe d'ouverture/fermeture qui s'escamote dans le profil du panneau extérieur et qui comporte une trappe d'accès à une poignée. Ces portes comprennent un mécanisme d'embrayage actionné par la trappe d'accès. Lorsqu'un utilisateur souhaite ouvrir la porte depuis l'extérieur, il repousse la trappe d'accès, qui est mobile, pour saisir la poignée. Le mouvement de cette trappe d'accès mobile est transmis au mécanisme d'embrayage qui couple ainsi le levier externe d'ouverture/fermeture avec le levier interne d'ouverture/fermeture.

Une telle porte d'aéronef comprend, notamment au niveau de son mécanisme d'embrayage et du mécanisme permettant la transmission des mouvements de la trappe d'accès mobile, de nombreuses pièces mobiles qui sont source de couts, de poids, de risques de pannes, et qui nécessitent une maintenance adaptée.

Par ailleurs, ce type de porte de l'art antérieur nécessite la présence d'une trappe mobile articulée sur le levier externe d'ouverture/fermeture, pour le fonctionnement du mécanisme d'embrayage, ce qui limite les possibilités de conception du levier externe d'ouverture/fermeture et de la porte d'aéronef en général.

Les documents US5636814 et US6116542 décrivent également des portes d'aéronef comportant un levier interne et un levier externe.

### EXPOSÉ DE L'INVENTION

L'invention a pour but d'améliorer les portes d'aéronef de l'art antérieur.

À cet effet, l'invention vise une porte d'aéronef comportant :
- une structure de porte sur sa face interne ;
- un panneau extérieur sur sa face externe ;
- un levier externe d'ouverture/fermeture, pivotant entre une position de fermeture dans laquelle il s'escamote dans le panneau extérieur, et une position d'ouverture ;
- un levier interne d'ouverture/fermeture disposé sur la face interne de la porte, ce levier interne d'ouverture/fermeture pivotant entre une position de fermeture et une position d'ouverture ;
- un mécanisme d'embrayage adapté à coupler le levier externe d'ouverture/fermeture au levier interne d'ouverture/fermeture.

Dans cette porte d'aéronef, le mécanisme d'embrayage comporte :
- une butée solidaire en rotation du levier externe d'ouverture/fermeture et une contrebutée solidaire en rotation du levier interne d'ouverture/fermeture, la butée étant adaptée à entraîner la contrebutée lorsque le levier interne d'ouverture/fermeture est dans sa position de fermeture et que le levier externe d'ouverture/fermeture est pivoté de sa position de fermeture à sa position d'ouverture ;
- un ergot solidaire en rotation du levier interne d'ouverture/fermeture et présentant une trajectoire circulaire lorsque le levier interne d'ouverture/fermeture est pivoté ;
- un cliquet d'embrayage monté pivotant sur un axe qui est solidaire en rotation du levier externe d'ouverture/fermeture, entre une position passive dans laquelle le cliquet d'embrayage est à l'écart de la trajectoire de l'ergot et une position active dans laquelle le cliquet d'embrayage est disposé sur la trajectoire de l'ergot ;
- un socle d'appui solidaire de la structure de porte et adapté à repousser le cliquet d'embrayage dans sa position passive lorsque le levier externe d'ouverture/fermeture est dans sa position de fermeture.

Une telle porte d'aéronef dispose d'un mécanisme d'embrayage dont le nombre de pièces a été fortement réduit par rapport à l'art antérieur. Un gain en matière, poids et fiabilité est ainsi obtenu grâce à l'invention.

De plus, cette porte d'aéronef ne nécessite pas la présence d'une trappe d'accès articulée sur le levier externe d'ouverture/fermeture. Si une trappe d'accès est nécessaire pour obturer un éventuel orifice de saisie d'une poignée, cette trappe peut être complètement indépendante du levier externe d'ouverture/fermeture, et peut être agencée par exemple directement sur le panneau extérieur. L'invention permet de nouvelles possibilités d'agencement des leviers au sein de la porte d'aéronef en s'affranchissant de la nécessité d'actionner un mécanisme d'embrayage par l'utilisateur.

Une telle porte d'aéronef bénéficie également d'un mécanisme d'embrayage pouvant bénéficier d'une protection supplémentaire permise par ce nouvel agencement du mécanisme d'embrayage.

La porte d'aéronef selon l'invention peut comporter les caractéristiques additionnelles suivantes, seules ou en combinaison :
- le cliquet d'embrayage comporte un talon adapté à coopérer avec un embout du socle d'appui : lorsque le levier externe d'ouverture/fermeture est dans sa position de fermeture, l'embout du socle d'appui est adapté à repousser le talon et à pivoter le cliquet d'embrayage dans sa position passive ; lorsque le levier externe d'ouverture/fermeture est hors de sa position de fermeture, l'embout du socle d'appui est à l'écart du talon et le cliquet d'embrayage est adapté à pivoter dans sa position active sous l'effet d'un élément élastique de rappel ;
- le cliquet d'embrayage comporte une tête présentant un profil arrondi, adaptée à coopérer avec l'ergot selon une liaison linéaire ;
- le cliquet d'embrayage est monté pivotant directement sur le levier externe d'ouverture/fermeture ;
- le mécanisme d'embrayage comporte une bague d'embrayage solidaire en rotation du levier interne d'ouverture/fermeture, l'ergot et la contrebutée étant formés chacun par un décrochement pratiqué sur la bague d'embrayage ;
- la porte comporte un mécanisme d'ouverture/fermeture commandé par la rotation d'un arbre de commande autour de son axe longitudinal, le levier interne d'ouverture/fermeture étant solidaire en rotation de l'arbre de commande ; et la bague d'embrayage est solidaire en rotation de l'arbre de commande ;
- le levier externe d'ouverture/fermeture est monté en liaison pivot autour de l'arbre de commande ;
- la butée est formée sur le levier externe d'ouverture/fermeture, en vis-à-vis de la contrebutée ;
- le cliquet d'embrayage est monté pivotant sur un élément solidaire en rotation du levier externe d'ouverture/fermeture ;
- le mécanisme d'embrayage comporte une bague d'embrayage solidaire en rotation du levier externe d'ouverture/fermeture, la butée étant formée sur la bague d'embrayage par un décrochement pratiqué sur la bague d'embrayage ;
- le cliquet d'embrayage est en liaison pivot avec la bague d'embrayage ;
- la porte comprend un mécanisme d'ouverture/fermeture commandé par la rotation d'un arbre de commande autour de son axe longitudinal, le levier interne d'ouverture/fermeture étant solidaire en rotation de l'arbre de commande ; et le mécanisme d'embrayage comporte un arbre d'embrayage dont l'axe de rotation est parallèle à l'axe de l'arbre de commande, la bague d'embrayage étant solidaire en rotation de l'arbre d'embrayage ;
- le levier externe d'ouverture/fermeture est solidaire en rotation de l'arbre d'embrayage ;
- la contrebutée est fixée sur le levier interne d'ouverture/fermeture ;
- la porte comprend un caisson d'étanchéité du levier externe d'ouverture/fermeture, le mécanisme d'embrayage étant situé sur la face interne de la porte d'aéronef, en dehors du caisson d'étanchéité.

### PRÉSENTATION DES FIGURES

D'autres caractéristiques et avantages de l'invention ressortiront de la description non limitative qui suit, en référence aux dessins annexés dans lesquels :
- La figure 1 est une vue générale d'une porte d'aéronef selon l'invention ;
- La figure 2 est une vue en perspective des leviers d'ouverture/fermeture et du mécanisme d'embrayage de la porte de la figure 1, selon un premier mode de réalisation ;
- La figure 3 est une vue de dessus en coupe de l'ensemble de la figure 2 ;
- La figure 4 est une vue de l'ensemble de la figure 3 dans une première position lors d'une séquence d'ouverture depuis l'intérieur de l'aéronef ;
- La figure 5 est une vue de l'ensemble de la figure 3 dans une deuxième position lors d'une séquence d'ouverture depuis l'intérieur de l'aéronef ;
- La figure 6 est une vue de l'ensemble de la figure 3 dans une première position lors d'une séquence d'ouverture depuis l'extérieur de l'aéronef ;
- La figure 7 est une vue de l'ensemble de la figure 3 dans une deuxième position lors d'une séquence d'ouverture depuis l'extérieur de l'aéronef ;
- La figure 8 est une vue de l'ensemble de la figure 3 dans une première position lors d'une séquence de fermeture de la porte depuis l'extérieur, après avoir été ouverte depuis l'intérieur ;
- La figure 9 est une vue de l'ensemble de la figure 3 dans une deuxième position lors d'une séquence de fermeture de la porte depuis l'extérieur, après avoir été ouverte depuis l'intérieur ;
- La figure 10 est une vue de l'ensemble de la figure 3 dans une troisième position lors d'une séquence de fermeture de la porte depuis l'extérieur, après avoir été ouverte depuis l'intérieur ;
- La figure 11 est une vue en perspective des leviers d'ouverture/fermeture et du mécanisme d'embrayage de la porte de la figure 1, selon un deuxième mode de réalisation ;
- La figure 12 est une vue de dessous de l'ensemble de la figure 11 ;
- La figure 13 est une vue schématique en coupe de la porte d'aéronef selon le deuxième mode de réalisation.

### DESCRIPTION DÉTAILLÉE

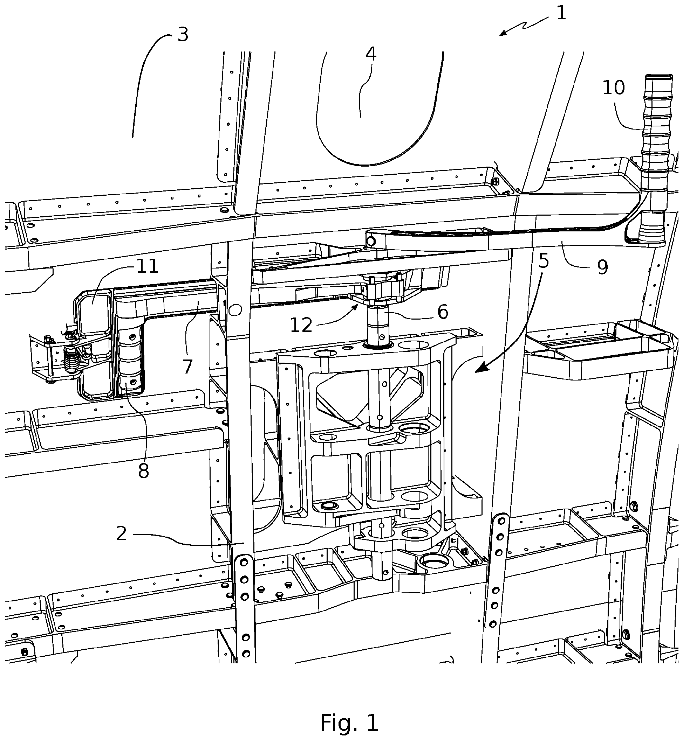

La figure 1 est une représentation partielle d'une porte d'aéronef 1 selon l'invention, vue depuis l'intérieur de l'aéronef. La face de la porte visible sur la figure 1 est donc la face interne de la porte 1.

Cette porte d'aéronef 1 est constituée d'une structure de porte 2 faite de poutres assemblées et destinée à assurer la tenue mécanique de l'ensemble. La porte 1 comprend également un panneau extérieur 3, également dénommé « peau », formant la face externe de la porte 1, fixé sur la structure 2 et prévu pour s'insérer dans le prolongement du fuselage de l'aéronef avec des moyens d'étanchéité, lorsque la porte 1 est fermée. Le panneau extérieur 3 peut comporter un ou plusieurs hublots 4 et de nombreux équipements et capotages (non représentés) sont par ailleurs montés dans la structure de porte 2.

Parmi les équipements possibles de la porte 1, la figure 1 représente un mécanisme d'ouverture/fermeture 5 permettant l'ouverture et la fermeture de la porte ainsi que son verrouillage et son déverrouillage. Ce mécanisme d'ouverture/fermeture 5 peut être tout mécanisme connu adapté à cette fonction et ne sera pas décrit plus en détail ici. Ce mécanisme d'ouverture/fermeture 5 est actionné par la rotation d'un arbre de commande 6 autour de son axe longitudinal.

Le déverrouillage et l'ouverture de la porte 1, ainsi que sa fermeture et son verrouillage peuvent être obtenus :
- depuis l'extérieur de l'aéronef en actionnant un levier dénommé levier externe d'ouverture/fermeture 7. Ce levier externe 7 est ici muni d'une poignée d'actionnement 8 à l'une de ses extrémités ;
- depuis l'intérieur de l'aéronef en actionnant un levier dénommé levier interne d'ouverture/fermeture 9. Ce levier interne 9 est ici muni d'une poignée d'actionnement 10 à l'une de ses extrémités.

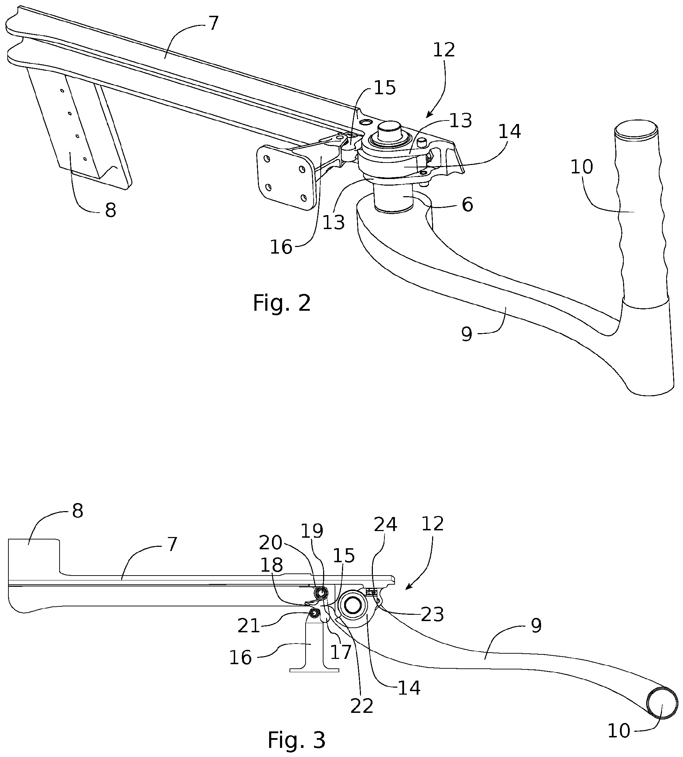

Les leviers externe 7 et interne 9 sont chacun mobiles en rotation entre deux positions extrêmes : une position de fermeture et une position d'ouverture. Sur la figure 2, les deux leviers 7, 9 sont dans leur position de fermeture. Le levier externe 7 ainsi que sa poignée 8 présentent une forme externe lisse destinée à s'escamoter dans le panneau extérieur 3, c'est-à-dire que la surface externe du levier externe 7 s'aligne dans le profil général du panneau extérieur 3, lorsque le levier externe 7 est dans sa position de fermeture, pour des raisons d'aérodynamisme.

La porte 1 est de plus munie d'une trappe rétractable 11 qui est montée pivotante directement sur le panneau extérieur 3, qui est indépendante du levier externe 7, et qui est sollicitée par un ressort de rappel vers une position fermée (celle représentée à la figure 1). Lorsque l'utilisateur souhaite, depuis l'extérieur, saisir la poignée 8 du levier externe 7, il repousse la trappe rétractable 11 vers l'intérieur de l'aéronef.

Dans le présent exemple, le levier interne 9 est solidaire en rotation avec l'arbre de commande 6, de sorte que le mécanisme d'ouverture/fermeture 5 est directement actionné par la rotation du levier interne 9 qui provoque la rotation de l'arbre de commande 6.

Le levier externe 7 est quant à lui monté rotatif sur l'arbre de commande 6 et son couplage en rotation au levier interne 9 est réalisé par un mécanisme d'embrayage 12. Le mécanisme d'embrayage 12 permet, dans certaines séquences d'ouverture ou de fermeture, de coupler les leviers 7, 9 de sorte que la rotation du levier externe 7 entraine la rotation du levier interne 9, ce qui entraine la rotation de l'arbre de commande 6, ce qui entraine finalement l'actionnement du mécanisme d'ouverture/fermeture 5.

La figure 2 est une vue en perspective de l'ensemble formé par le levier externe 7, le levier interne 9 et le mécanisme d'embrayage 12. La portion supérieure de l'arbre de commande 6 est également visible.

Le levier interne 9 est ici fixé directement sur l'arbre de commande 6, par exemple par serrage, clavetage, ou tout autre moyen adapté. Le levier externe 7 est monté tournant sur l'arbre de commande 6 grâce à un palier constitué de deux flasques 13 sur lesquelles l'arbre de commande 6 est monté selon une liaison pivot, grâce à des roulements ou tout autre moyen adapté.

Le mécanisme d'embrayage 12 comporte ici une bague d'embrayage 14 qui est solidaire en rotation avec l'arbre de commande 6. La bague d'embrayage 14 peut être directement montée serrée sur l'arbre de commande 6 ou être rendue solidaire en rotation de l'arbre de commande 6 par tout moyen, tel que des cannelures.

L'arbre de commande 6, le levier interne 9 et la bague d'embrayage 14 forment un ensemble solidaire et l'entrainement en rotation du levier interne 9 par sa poignée 10 entraine la rotation de l'ensemble. Le levier externe 7 est en liaison pivot avec cet ensemble, sa rotation autour de l'arbre de commande 6 étant libre et indépendante de cet ensemble, si ce n'est l'action du mécanisme d'embrayage 12.

Le mécanisme d'embrayage 12 comporte :
- un cliquet d'embrayage 15 monté pivotant sur un axe 19 qui est solidaire en rotation du levier externe 7 (dans cet exemple, l'axe 19 est directement monté sur le levier externe 7) ;
- un socle d'appui 16 fixé sur la structure de porte 2, et qui est donc fixe par rapport aux mouvements de rotation des leviers 7, 9, ce socle d'appui 16 étant adapté à coopérer avec le cliquet d'embrayage 15 ;
- une butée 24 qui est, dans le présent exemple, directement usinée sur le corps du levier externe 7 ;
- la bague d'embrayage 14.

La figure 3 est une vue de dessus de la figure 2, en coupe selon un plan horizontal coupant le levier externe 7 le long de sa direction longitudinale.

La figure 3 rend visible notamment le profil du cliquet d'embrayage 15 qui comporte une tête 17 ainsi qu'un talon 18 sur lequel une force exercée peut actionner la rotation du cliquet 15 autour de son axe 19.

Le cliquet 15 est monté tournant sur le levier externe 7, autour de l'axe 19, entre deux positions extrêmes dites active et passive. Un ressort de rappel 20 sollicite le cliquet 15 vers sa position active. Sur la figure 3, le cliquet 15 est dans sa position passive car le levier externe 7 est dans sa position de fermeture, ce qui contraint le talon 18 a être repoussé par le socle d'appui 16.

Le socle d'appui 16 comporte, dans le présent exemple, un embout 21 destiné à coopérer avec le talon 18. L'embout 21 est de préférence constitué d'un roulement permettant de rouler sans glissement sur le talon 18. Le socle d'appui 16 est dimensionné et positionné pour que, lorsque le levier externe 7 est dans sa position de fermeture, l'embout 21 vienne suffisamment pousser sur le talon 18 pour provoquer le pivotement du cliquet 15 et son maintien dans sa position passive. Cette configuration est celle représentée à la figure 3.

La bague d'embrayage 14 présente une forme généralement circulaire mais comporte néanmoins un ergot 22 ainsi qu'une contrebutée 23 destinée à coopérer avec la butée 24 située sur le levier interne 9. L'ergot 22 et la contrebutée 23 sont ici formées chacune par un décrochement usiné sur la bague d'embrayage 14. Optionnellement, la contrebutée 23 est munie d'une vis de réglage pour ajuster son point de contact avec la butée 24.

L'ergot 22 présente une trajectoire possible qui est circulaire et qui correspond à la rotation de la bague d'embrayage 14 conjointement avec l'arbre de commande 6 autour de l'axe longitudinal de l'arbre de commande 6.

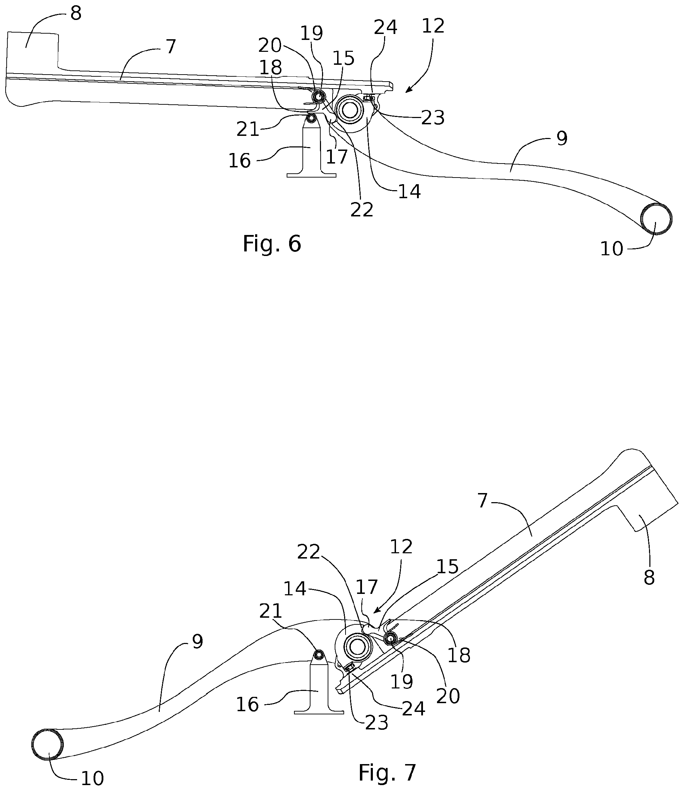

Lorsque le cliquet 15 est dans sa position passive (voir figure 3), sa tête 17 est à l'écart de la trajectoire de l'ergot 22, c'est-à-dire que lorsque le levier interne 9 est actionné en rotation, l'ergot 22 ne peut pas rencontrer la tête 17 du cliquet 15. À l'inverse, lorsque le cliquet 15 est dans sa position active (voir par exemple figure 6), alors la tête 17 du cliquet 15 est disposée dans la trajectoire de l'ergot 22.

La contrebutée 23 est quant à elle toujours dans la trajectoire de la butée 24.

Des séquences d'ouverture et de fermeture de la porte d'aéronef 1 vont maintenant être décrites en référence aux figures 3 à 10.

Sur la position de départ de la figure 3, les leviers 7, 9 sont tous deux dans leur position de fermeture, ce qui correspond notamment à une configuration de porte fermée et verrouillée permettant par exemple le vol de l'aéronef.

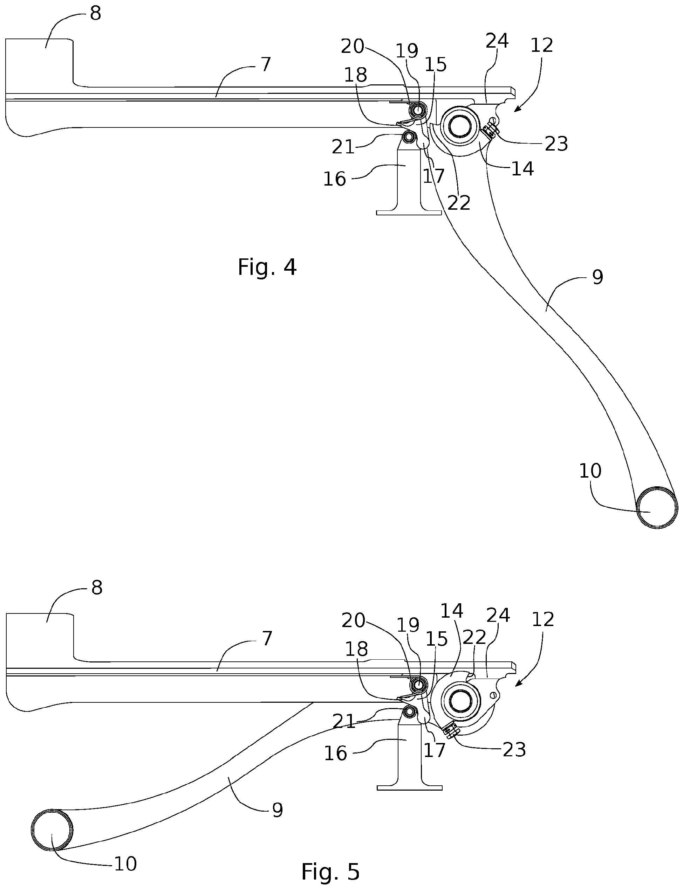

À partir de cette position de la figure 3, lorsque les conditions de sécurité requises sont réunies, un utilisateur peut commander l'ouverture de la porte depuis l'intérieur de la cabine de l'aéronef. La figure 4 illustre l'actionnement en rotation du levier interne 9 que l'utilisateur a saisi par sa poignée 10. L'ensemble formé du levier interne 9, de l'arbre de commande 6, et de la bague d'embrayage 14 est ainsi entraîné en rotation. La contrebutée 23 se sépare de la butée 24 et l'ergot 22 parcourt sa trajectoire circulaire sans rencontrer le cliquet d'embrayage 15, ce dernier étant dans sa position passive. La figure 5 illustre la fin du mouvement du levier interne 9, qui permet l'ouverture de la porte, le levier interne 9 étant alors dans sa position d'ouverture après avoir parcouru toute sa course angulaire et être venu en butée. Dans la position de la figure 5, le mécanisme d'ouverture/fermeture 5 a été actionné jusqu'au bout en actionnant uniquement le levier interne 9 tandis que le levier externe 7 est resté en position de fermeture. Durant cette séquence d'ouverture depuis l'intérieur, le levier externe 7 est débrayé et ne subit pas l'influence du levier interne 9.

La porte d'aéronef est ainsi actionnée en toute sécurité depuis l'intérieur, grâce au mécanisme d'embrayage 12, sans aucun actionnement d'éléments mobiles sur la face externe de la porte.

Les figures 6 et 7 illustrent quant à elles une séquence d'ouverture de la porte par l'extérieur de l'aéronef.

À partir de la position de départ de la figure 3, la poignée 8 du levier externe 7 est actionnée par un utilisateur qui entraine le levier externe 7 en rotation. La rotation du levier externe 7 entraine la butée 24 à venir repousser la contrebutée 23 et donc à entraîner en rotation également le levier interne 9. Les leviers 7, 9 sont ainsi embrayés, dans ce sens de rotation.

La figure 6 illustre une première phase de ce mouvement dans laquelle le levier externe 7 a pivoté d'une faible course angulaire. Dans le présent exemple, le levier externe 7 a pivoté de 2° entre sa position de la figure 3 et sa position de la figure 6. Cette première phase du mouvement permet de plus de libérer le cliquet 15 car, le socle d'appui 16 étant solidaire de la structure de porte 2, le mouvement de rotation du levier externe 7 entraine un éloignement du talon 18 par rapport à l'embout 21 de sorte que le socle d'appui 16 ne maintient plus le cliquet 15 dans sa position passive, et ce dernier bascule alors dans sa position active sous l'effet du ressort de rappel 20. Cette première phase de la rotation du levier externe 7 a donc pour conséquence de placer le cliquet 15 sur la trajectoire de l'ergot 22.

Cependant, compte tenu du sens de rotation du levier externe 7, le cliquet 15 n'est pas amené à coopérer avec l'ergot 22 durant cette phase d'ouverture mais est ainsi préparé pour la phase de fermeture. Seule la butée 24 repousse la contrebutée 23 de sorte que la rotation du levier externe 7 entraine la rotation du levier interne 9.

La rotation du levier externe 7 est ensuite poursuivie par l'utilisateur jusqu'à la position de fin de course illustrée à la figure 7, dans laquelle le levier externe 7 est dans sa position d'ouverture. Le levier interne 9 a également été entraîné lui-même jusqu'à sa position d'ouverture, ce qui a entraîné la rotation de l'arbre de commande 6 et donc le mécanisme d'ouverture/fermeture 5.

Une fois l'ouverture de la porte ainsi obtenue depuis l'extérieur de l'aéronef, la porte peut indifféremment être refermée grâce au levier interne 9 ou au levier externe 7 :
- l'actionnement du levier interne 9 vers sa position de fermeture entraine directement la rotation de l'arbre de commande 6 ;
- l'actionnement du levier externe 7 de retour vers sa position de fermeture entraine cette fois-ci également la rotation du levier interne 9 grâce à la coopération du cliquet 15 avec l'ergot 22. La tête 17 du cliquet 15 repousse en effet l'ergot 22 lorsque le levier externe 7 est actionné vers sa position de fermeture, et assure le couplage en rotation du levier externe 7 et du levier interne 9, dans ce sens de rotation.

La tête 17 du cliquet 15 présente un profil courbe (le profil est ici en arc de cercle) permettant une liaison linéaire (théorique) lorsque la tête 17 repousse le talon 18.

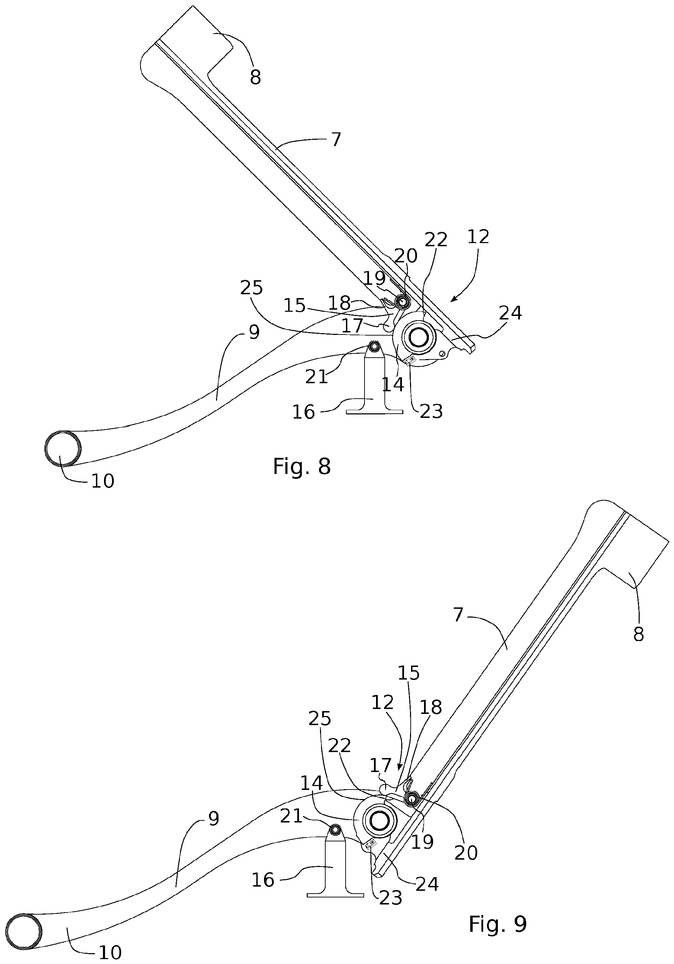

Les figures 8 à 10 illustrent une séquence dans laquelle le mécanisme d'embrayage permet la fermeture de la porte par le levier externe 7, après une ouverture par le levier interne 9.

La porte est donc tout d'abord ouverte en actionnant le levier interne 9 depuis l'intérieur de l'aéronef, jusqu'à aboutir à la position de la figure 5. À partir de cette position, dans laquelle le levier externe 7 est dans sa position de fermeture tandis que le levier interne 9 est dans sa position d'ouverture, le levier externe 7 est ensuite actionné dans l'intention de refermer la porte depuis l'extérieur de l'aéronef.

Le levier externe 7 est alors tout d'abord ramené de sa position de fermeture (figure 5), vers sa position d'ouverture. La figure 8 illustre l'actionnement en rotation du levier externe 7 par l'utilisateur, à mi-chemin entre sa position de fermeture et sa position d'ouverture. Durant ce parcours, le cliquet 15 est libéré de sa position passive suite à l'éloignement entre le cliquet 15 et le socle d'appui 16. Le ressort de rappel 20 sollicite alors le cliquet 15 vers sa position active mais ce dernier ne peut cependant pas rejoindre directement sa position active car il vient buter contre la surface circulaire de la bague d'embrayage 14, qui constitue une rampe 25. Le mouvement de rotation du levier externe 7 se poursuit avec la tête 17 du cliquet 15 glissant sur la rampe 25 en direction de l'ergot 22, jusqu'à la position de la figure 9 dans laquelle la tête 17 parvient à l'aplomb de l'ergot 22.

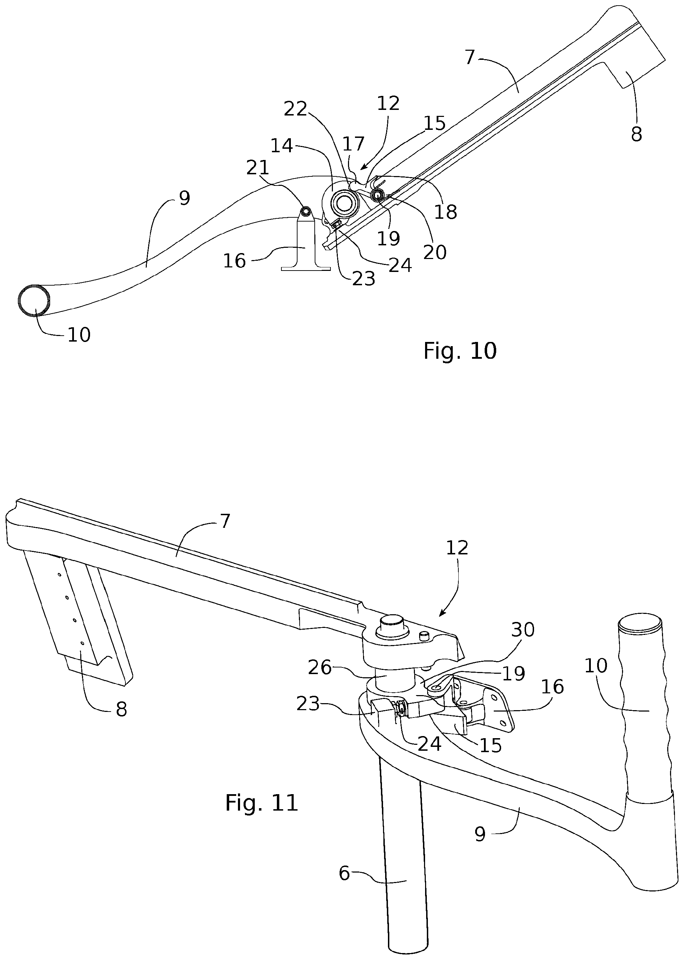

À partir de la position de la figure 9, la poursuite du mouvement de rotation du levier externe 7 conduit à la position de la figure 10 dans laquelle la tête 17 du cliquet 15 bascule devant l'ergot 22 sous l'effet du ressort de rappel 20. Sur cette figure 10, le levier externe 7 est donc en position d'ouverture de même que le levier interne 9. Cette position de la figure 10 correspond donc exactement à la position de la figure 7 illustrant la fin de la séquence d'ouverture par le levier externe 7. À partir de cette position de la figure 10, comme de celle de la figure 7, la fermeture de la porte peut donc être opérée directement par la rotation du levier externe 7, cette fois-ci dans le sens inverse, pour ramener ce levier externe 7 à sa position de fermeture, ce qui entraine la rotation du levier interne 9 grâce au cliquet 15 qui entraine en rotation la bague d'embrayage 14 en repoussant son ergot 22, comme décrit précédemment.

La figure 11 à 13 illustre un deuxième mode de réalisation de l'invention. Ce deuxième mode de réalisation concerne une variante du mécanisme d'embrayage 12. Les autres éléments de la porte sont identiques ou similaires et ces éléments communs aux deux modes de réalisation portent les mêmes numéros de renvoi aux figures.

Selon ce deuxième mode de réalisation, le mécanisme d'embrayage 12 comprend un arbre d'embrayage 26 disposé dans le prolongement de l'arbre de commande 6 du mécanisme d'ouverture/fermeture 5. Les arbres 6 et 26 sont simplement disposés dans le prolongement l'un de l'autre et ne présentent pas d'autre moyen d'accouplement que le mécanisme d'embrayage 12. Une nouvelle bague d'embrayage 30 est ici solidaire de l'arbre d'embrayage 26, de même que le levier externe 7. Le levier externe 7, l'arbre d'embrayage 26 et la bague d'embrayage 30 forment ainsi un ensemble solidaire qui peut être actionné en rotation par l'actionnement du levier externe 7, ce qui entraine l'ensemble en rotation autour de l'axe longitudinal de l'arbre d'embrayage 26. L'arbre d'embrayage 26 est monté en rotation libre sur la structure de porte 2, par exemple par des paliers (non représentés).

L'arbre de commande 6 est solidaire du levier interne 9. L'arbre de commande 6 et le levier interne 9 forment donc un ensemble solidaire qui peut être actionné en rotation autour de l'axe longitudinal de l'arbre de commande 6, indépendamment de l'ensemble formé par le levier externe 7, l'arbre d'embrayage 26, et la bague d'embrayage 30, cet ensemble tournant autour de l'axe longitudinal de l'arbre 26.

La bague d'embrayage 30 est également munie d'une butée 24, formée ici d'un décrochement usiné sur la bague 30, qui est adaptée à coopérer avec une contrebutée 23 fixée sur le levier interne 9. L'une ou l'autre de la butée 24 ou contrebutée 23 peut comporter une vis de réglage permettant l'ajustement de la position angulaire à laquelle est réalisé le contact entre les butées.

Le cliquet d'embrayage 15 est ici monté pivotant directement sur la bague d'embrayage 30 et, de même que dans le premier mode de réalisation, le socle d'appui 16 est prévu pour maintenir ce cliquet 15 dans sa position passive lorsque le levier externe 7 est dans sa position de fermeture.

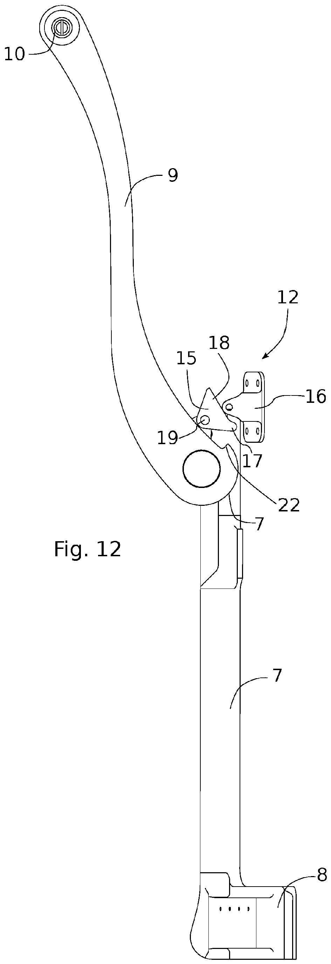

La figure 12 est une vue de dessous de la figure 11. Selon ce deuxième mode de réalisation, l'ergot 22 est solidaire du levier interne 9. Le levier interne 9 peut avantageusement être réalisé d'une seule pièce sur laquelle sont usinés aussi bien la contrebutée 23 que l'ergot 22.

Sur la position des figures 11 et 12, les deux leviers externe 7 et interne 9 sont donc en position de fermeture et le cliquet 15 est ainsi maintenu dans sa position passive.

Le montage des figures 11 et 12, conforme à ce deuxième mode de réalisation, assure les mêmes séquences d'ouverture et de fermeture que celles décrites au premier mode de réalisation.

Ainsi, la porte peut être ouverte de l'intérieur en actionnant le levier interne 9 tandis que le levier externe 7 est maintenu dans sa position de fermeture.

L'ouverture par l'extérieur de l'aéronef peut être obtenue par l'actionnement du levier externe 7 qui entraine alors en rotation le levier interne 9 grâce à la butée 24 qui repousse la contrebutée 23. Le mouvement de rotation du levier externe 7 entraine de plus l'écartement du cliquet 15 et du socle d'appui 16, entrainant le cliquet 15 contre la rampe 25 puis vers sa position active, ce qui permet de refermer la porte depuis l'extérieur par l'actionnement du levier externe 7 de retour à sa position de fermeture, le levier interne 9 étant alors actionné en rotation par le cliquet 15 qui repousse l'ergot 22.

Dans ce deuxième mode de réalisation, il n'est pas nécessaire que l'arbre de commande 6 et l'arbre d'embrayage 26 soient coaxiaux. Un désalignement de ces deux arbres est possible tant que la butée 24 et la contrebutée 23 sont adaptées à travailler ensemble, de même que le cliquet 15 et l'ergot 22.

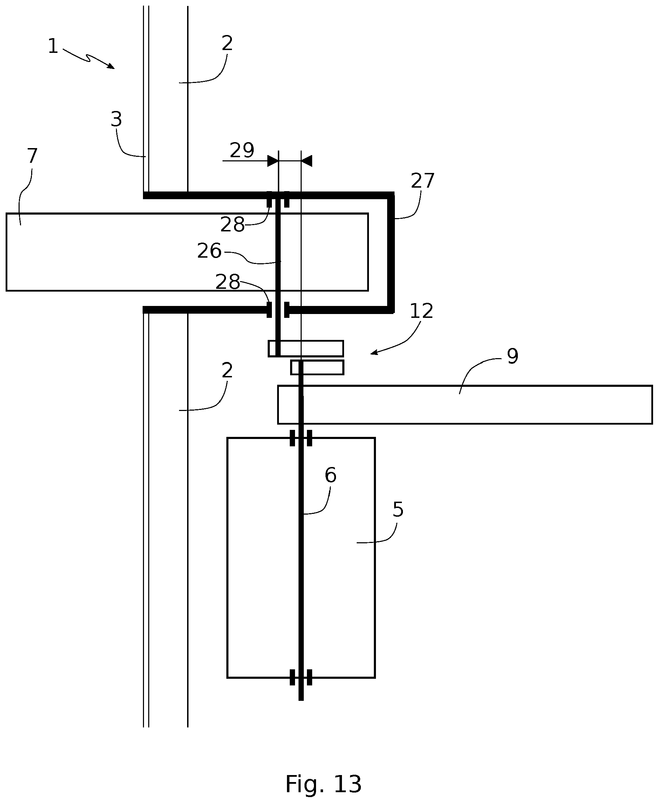

La figure 13 est une figure schématique illustrant les possibilités de montage de la porte selon ce deuxième mode de réalisation.

Sur cette vue schématique de la figure 13, la porte 1 est vue en coupe. Sur cette figure, un caisson d'étanchéité 27 a été représenté autour du levier externe 7. Le levier externe 7 étant situé sur la face externe de la porte, il doit nécessairement être logé dans un caisson étanche permettant de maintenir la pressurisation à l'intérieur de la cabine de l'aéronef durant le vol. Tous les mécanismes traversant ce caisson d'étanchéité 27 devront être munis des joints adéquats pour en garantir l'étanchéité.

Ce deuxième mode de réalisation permet de simplifier le montage du levier externe 7 dans son caisson d'étanchéité 27 puisque ce montage se résume alors à une liaison pivot entre le caisson 27 et le levier externe 7, par exemple à l'aide de paliers 28 étanches.

Comme évoqué précédemment, le mécanisme d'embrayage 12 accepte un désalignement 29 des arbres 6, 26, ce qui simplifie le montage de l'ensemble et permet de réaliser d'importantes économies dans la construction mécanique de l'ensemble, dans la mesure où les chaînes de cote sont simplifiées et les tolérances de réalisation et de montage des pièces sont plus grandes.

Le montage est également simplifié car deux arbres 6, 26 plus courts sont plus faciles à monter sur des paliers chacun de leur côté, plutôt qu'un seul arbre plus long qui requière un meilleur alignement des paliers.

De plus, selon ce deuxième mode de réalisation, le mécanisme d'embrayage 12 est situé à l'extérieur du caisson d'étanchéité 27 et donc à l'intérieur de la cabine de l'aéronef, et est donc ainsi mieux protégé des températures extrêmes, des poussières, des intempéries, et autres conditions atmosphériques de haute altitude.

Des variantes de réalisation de la porte d'aéronef peuvent être mises en oeuvre. Par exemple, d'autres agencements de la bague d'embrayage peuvent être prévus, de même qu'une suppression de cette bague d'embrayage, tant que la butée est solidaire en rotation du levier externe, que l'ergot est solidaire en rotation du levier interne, et que le cliquet d'embrayage est monté pivotant sur un axe qui est solidaire en rotation du levier externe.

## Revendications

1. Porte d'aéronef comportant :
- une structure de porte (2) sur sa face interne ;
- un panneau extérieur (3) sur sa face externe ;
- un levier externe d'ouverture/fermeture (7), pivotant entre une position de fermeture dans laquelle il s'escamote dans le panneau extérieur (3), et une position d'ouverture ;
- un levier interne d'ouverture/fermeture (9) disposé sur la face interne de la porte, ce levier interne d'ouverture/fermeture (9) pivotant entre une position de fermeture et une position d'ouverture ;
- un mécanisme d'embrayage (12) adapté à coupler le levier externe d'ouverture/fermeture (7) au levier interne d'ouverture/fermeture ;
le mécanisme d'embrayage (12) comporte en outre :
- une butée (24) solidaire en rotation du levier externe d'ouverture/fermeture (7) et une contrebutée (23) solidaire en rotation du levier interne d'ouverture/fermeture (9), la butée (24) étant adaptée à entraîner la contrebutée (23) lorsque le levier interne d'ouverture/fermeture (9) est dans sa position de fermeture et que le levier externe d'ouverture/fermeture (7) est pivoté de sa position de fermeture à sa position d'ouverture ;
- un ergot (22) solidaire en rotation du levier interne d'ouverture/fermeture (9) et présentant une trajectoire circulaire lorsque le levier interne d'ouverture/fermeture (9) est pivoté ;
- un cliquet d'embrayage (15) monté pivotant sur un axe (19) qui est solidaire en rotation du levier externe d'ouverture/fermeture (7), entre une position passive dans laquelle le cliquet d'embrayage (15) est à l'écart de la trajectoire de l'ergot (22) et une position active dans laquelle le cliquet d'embrayage (15) est disposé sur la trajectoire de l'ergot (22) ;
- un socle d'appui (16) solidaire de la structure de porte (2) et adapté à repousser le cliquet d'embrayage (15) dans sa position passive lorsque le levier externe d'ouverture/fermeture (7) est dans sa position de fermeture.

2. Porte d'aéronef selon la revendication 1, **caractérisée en ce que** le cliquet d'embrayage (15) comporte un talon (18) adapté à coopérer avec un embout (21) du socle d'appui (16) :
- lorsque le levier externe d'ouverture/fermeture (7) est dans sa position de fermeture, l'embout (21) du socle d'appui (16) est adapté à repousser le talon (18) et à pivoter le cliquet d'embrayage (15) dans sa position passive ;
- lorsque le levier externe d'ouverture/fermeture (7) est hors de sa position de fermeture, l'embout (21) du socle d'appui (16) est à l'écart du talon (18) et le cliquet d'embrayage (15) est adapté à pivoter dans sa position active sous l'effet d'un élément élastique de rappel (20).

3. Porte d'aéronef selon l'une des revendications précédentes, **caractérisée en ce que** le cliquet d'embrayage (15) comporte une tête (17) présentant un profil arrondi, adaptée à coopérer avec l'ergot (22) selon une liaison linéaire.

4. Porte d'aéronef selon l'une des revendications précédentes, **caractérisée en ce que** le cliquet d'embrayage (15) est monté pivotant directement sur le levier externe d'ouverture/fermeture (7).

5. Porte d'aéronef selon l'une des revendications précédentes, **caractérisée en ce que** le mécanisme d'embrayage (12) comporte une bague d'embrayage (14) solidaire en rotation du levier interne d'ouverture/fermeture (9), l'ergot (22) et la contrebutée (23) étant formés chacun par un décrochement pratiqué sur la bague d'embrayage (14).

6. Porte d'aéronef selon la revendication 5, **caractérisée en ce que** : elle comporte un mécanisme d'ouverture/fermeture (5) commandé par la rotation d'un arbre de commande (6) autour de son axe longitudinal, le levier interne d'ouverture/fermeture (9) étant solidaire en rotation de l'arbre de commande (6) ; et **en ce que** la bague d'embrayage (14) est solidaire en rotation de l'arbre de commande (6).

7. Porte d'aéronef selon la revendication 6, **caractérisée en ce que** le levier externe d'ouverture/fermeture (7) est monté en liaison pivot autour de l'arbre de commande (6).

8. Porte d'aéronef selon l'une des revendications 4 à 7, **caractérisée en ce que** la butée (24) est formée sur le levier externe d'ouverture/fermeture (7), en vis-à-vis de la contrebutée (23).

9. Porte d'aéronef selon l'une des revendications 1 à 3, **caractérisée en ce que** le cliquet d'embrayage (15) est monté pivotant sur un élément solidaire en rotation du levier externe d'ouverture/fermeture (7).

10. Porte d'aéronef selon la revendication 9, **caractérisée en ce que** le mécanisme d'embrayage (12) comporte une bague d'embrayage (30) solidaire en rotation du levier externe d'ouverture/fermeture (7), la butée (24) étant formée sur la bague d'embrayage (30) par un décrochement pratiqué sur la bague d'embrayage (30).

11. Porte d'aéronef selon la revendication 10, **caractérisée en ce que** le cliquet d'embrayage (15) est en liaison pivot avec la bague d'embrayage (30).

12. Porte d'aéronef selon l'une des revendications 10 à 11, **caractérisée en ce que** : elle comporte un mécanisme d'ouverture/fermeture (5) commandé par la rotation d'un arbre de commande (6) autour de son axe longitudinal, le levier interne d'ouverture/fermeture (9) étant solidaire en rotation de l'arbre de commande (6) ; et **en ce que** le mécanisme d'embrayage (12) comporte un arbre d'embrayage (26) dont l'axe de rotation est parallèle à l'axe de l'arbre de commande (6), la bague d'embrayage (30) étant solidaire en rotation de l'arbre d'embrayage (30).

13. Porte d'aéronef selon la revendication 12, **caractérisée en ce que** le levier externe d'ouverture/fermeture (7) est solidaire en rotation de l'arbre d'embrayage (30).

14. Porte d'aéronef selon l'une des revendications 9 à 13, **caractérisée en ce que** la contrebutée (23) est fixée sur le levier interne d'ouverture/fermeture (9).

15. Porte d'aéronef selon l'une des revendications 9 à 14, **caractérisée en ce qu'**elle comporte un caisson d'étanchéité (27) du levier externe d'ouverture/fermeture (7), le mécanisme d'embrayage (12) étant situé sur la face interne de la porte d'aéronef, en dehors du caisson d'étanchéité (27).

## Patentansprüche

1. Luftfahrzeugtür, umfassend:
- eine Türstruktur (2) auf ihrer Innenseite;
- eine äußere Platte (3) auf ihrer Außenseite;
- einen äußeren Öffnungs-/Schließhebel (7), der zwischen einer Schließposition, in der er in die äußere Platte (3) eingezogen ist, und einer Öffnungsposition schwenkbar ist;
- einen inneren Öffnungs-/Schließhebel (9), der an der Innenseite der Tür angeordnet ist, wobei der innere Öffnungs-/Schließhebel (9) zwischen einer Schließposition und einer Öffnungsposition schwenkbar ist;
- einen Kupplungsmechanismus (12), der dazu geeignet ist, den äußeren Öffnungs-/Schließhebel (7) mit dem inneren Öffnungs-/Schließhebel zu koppeln;
wobei der Kupplungsmechanismus (12) ferner Folgendes umfasst:
- einen Anschlag (24), der drehfest mit dem äußeren Öffnungs-/Schließhebel (7) verbunden ist, und einen Gegenanschlag (23), der drehfest mit dem inneren Öffnungs-/Schließhebel (9) verbunden ist, wobei der Anschlag (24) dazu ausgelegt ist, den Gegenanschlag (23) zu bewegen, wenn sich der innere Öffnungs-/Schließhebel (9) in seiner Schließposition befindet und der äußere Öffnungs-/Schließhebel (7) aus seiner Schließposition in seine Öffnungsposition geschwenkt wird;
- einen Stift (22), der drehfest mit dem inneren Öffnungs-/Schließhebel (9) verbunden ist und eine kreisförmige Bahn aufweist, wenn der innere Öffnungs-/Schließhebel (9) geschwenkt wird;
- eine Kupplungsklinke (15), die auf einer drehfest mit dem äußeren Öffnungs-/Schließhebel (7) verbundenen Achse (19) zwischen einer passiven Position, in der die Kupplungsklinke (15) von der Bahn des Stifts (22) beabstandet ist, und einer aktiven Position, in der die Kupplungsklinke (15) auf der Bahn des Stifts (22) angeordnet ist, schwenkbar montiert ist;
- einen Stützsockel (16), der fest mit der Türstruktur (2) verbunden und dazu ausgelegt ist, die Kupplungsklinke (15) in ihre passive Position zurückzudrücken, wenn sich der äußere Öffnungs-/Schließhebel (7) in seiner Schließposition befindet.

2. Luftfahrzeugtür nach Anspruch 1, **dadurch gekennzeichnet, dass** die Kupplungsklinke (15) einen Absatz (18) aufweist, der dazu ausgelegt ist, mit einer Spitze (21) des Stützsockels (16) zusammenzuwirken:
- wenn sich der äußere Öffnungs-/Schließhebel (7) in seiner Schließposition befindet, ist die Spitze (21) des Stützsockels (16) dazu ausgelegt, den Absatz (18) zurückzudrücken und die Kupplungsklinke (15) in ihre passive Position zu schwenken;
- wenn sich der äußere Öffnungs-/Schließhebel (7) außerhalb seiner Schließposition befindet, ist die Spitze (21) des Stützsockels (16) vom Absatz (18) beabstandet, und die Kupplungsklinke (15) ist dazu ausgelegt, unter der Wirkung eines elastischen Rückstellelements (20) in ihre aktive Position zu schwenken.

3. Luftfahrzeugtür nach einem der vorangehenden Ansprüche, **dadurch gekennzeichnet, dass** die Kupplungsklinke (15) einen Kopf (17) mit einem abgerundeten Profil aufweist, der dazu ausgelegt ist, mit dem Stift (22) gemäß einer linearen Verbindung zusammenzuwirken.

4. Luftfahrzeugtür nach einem der vorangehenden Ansprüche, **dadurch gekennzeichnet, dass** die Kupplungsklinke (15) schwenkbar direkt am äußeren Öffnungs-/Schließhebel (7) montiert ist.

5. Luftfahrzeugtür nach einem der vorangehenden Ansprüche, **dadurch gekennzeichnet, dass** der Kupplungsmechanismus (12) einen Kupplungsring (14) umfasst, der drehfest mit dem inneren Öffnungs-/Schließhebel (9) verbunden ist, wobei der Stift (22) und der Gegenanschlag (23) jeweils durch einen am Kupplungsring (14) vorgesehenen Absatz ausgebildet sind.

6. Luftfahrzeugtür nach Anspruch 5, **dadurch gekennzeichnet, dass** sie einen Öffnungs-/Schließmechanismus (5) umfasst, der durch die Drehung einer Antriebswelle (6) um ihre Längsachse gesteuert wird, wobei der innere Öffnungs-/Schließhebel (9) drehfest mit der Antriebswelle (6) verbunden ist; und dass der Kupplungsring (14) drehfest mit der Antriebswelle (6) verbunden ist.

7. Luftfahrzeugtür nach Anspruch 6, **dadurch gekennzeichnet, dass** der äußere Öffnungs-/Schließhebel (7) schwenkbar um die Antriebswelle (6) montiert ist.

8. Luftfahrzeugtür nach einem der Ansprüche 4 bis 7, **dadurch gekennzeichnet, dass** der Anschlag (24) am äußeren Öffnungs-/Schließhebel (7) gegenüber dem Gegenanschlag (23) ausgebildet ist.

9. Luftfahrzeugtür nach einem der Ansprüche 1 bis 3, **dadurch gekennzeichnet, dass** die Kupplungsklinke (15) schwenkbar an einem drehfest mit dem äußeren Öffnungs-/Schließhebel (7) verbundenen Element montiert ist.

10. Luftfahrzeugtür nach Anspruch 9, **dadurch gekennzeichnet, dass** der Kupplungsmechanismus (12) einen Kupplungsring (30) aufweist, der drehfest mit dem äußeren Öffnungs-/Schließhebel (7) verbunden ist, wobei der Anschlag (24) am Kupplungsring (30) durch einen am Kupplungsring (30) vorgesehenen Absatz ausgebildet ist.

11. Luftfahrzeugtür nach Anspruch 10, **dadurch gekennzeichnet, dass** die Kupplungsklinke (15) in Schwenkverbindung mit dem Kupplungsring (30) steht.

12. Luftfahrzeugtür nach einem der Ansprüche 10 bis 11, **dadurch gekennzeichnet, dass** sie einen Öffnungs-/Schließmechanismus (5) aufweist, der durch die Drehung einer Antriebswelle (6) um ihre Längsachse gesteuert wird, wobei der innere Öffnungs-/Schließhebel (9) drehfest mit der Antriebswelle (6) verbunden ist; und dass der Kupplungsmechanismus (12) eine Kupplungswelle (26) umfasst, deren Drehachse parallel zur Achse der Antriebswelle (6) verläuft, wobei der Kupplungsring (30) drehfest mit der Kupplungswelle (30) verbunden ist.

13. Luftfahrzeugtür nach Anspruch 12, **dadurch gekennzeichnet, dass** der äußere Öffnungs-/Schließhebel (7) drehfest mit der Kupplungswelle (30) verbunden ist.

14. Luftfahrzeugtür nach einem der Ansprüche 9 bis 13, **dadurch gekennzeichnet, dass** der Gegenanschlag (23) am inneren Öffnungs-/Schließhebel (9) befestigt ist.

15. Luftfahrzeugtür nach einem der Ansprüche 9 bis 14, **dadurch gekennzeichnet, dass** sie einen Dichtungskasten (27) des äußeren Öffnungs-/Schließhebels (7) aufweist, wobei sich der Kupplungsmechanismus (12) an der Innenseite der Tür des Luftfahrzeugs außerhalb des Dichtungskastens (27) befindet.

## Claims

1. An aircraft door comprising:
- a door structure (2) on its internal face;
- an outer panel (3) on its external face;
- an external opening/closing lever (7), pivoting between a closed position, in which it retracts into the outer panel (3), and an open position;
- an internal opening/closing lever (9) disposed on the internal face of the door, this internal opening/closing lever (9) pivoting between a closed position and an open position;
- an engaging mechanism (12) designed to couple the external opening/closing lever (7) to the internal opening/closing lever;
- the engaging mechanism (12) also comprises:
- a stop (24) that rotates as one with the external opening/closing lever (7) and a counter-stop (23) that rotates as one with the internal opening/closing lever (9), the stop (24) being designed to entrain the counter-stop (23) when the internal opening/closing lever (9) is in its closed position and the external opening/closing lever (7) is pivoted from its closed position to its open position;
- a lug (22) that rotates as one with the internal opening/closing lever (9) and exhibits a circular path when the internal opening/closing lever (9) is pivoted;
- an engaging pawl (15) mounted so as to pivot on an axle (19) which rotates as one with the external opening/closing lever (7), between a passive position in which the engaging pawl (15) is spaced apart from the path of the lug (22), and an active position in which the engaging pawl (15) is disposed on the path of the lug (22);
- a support base (16) secured to the door structure (2) and designed to push the engaging pawl (15) back into its passive position when the external opening/closing lever (7) is in its closed position.

2. The aircraft door as claimed in claim 1, **characterized in that** the engaging pawl (15) comprises a heel (18) designed to cooperate with an end piece (21) of the support base (16):
- when the external opening/closing lever (7) is in its closed position, the end piece (21) of the support base (16) is designed to push back the heel (18) and to pivot the engaging pawl (15) into its passive position;
- when the external opening/closing lever (7) is out of its closed position, the end piece (21) of the support base (16) is spaced apart from the heel (18) and the engaging pawl (15) is designed to pivot into its active position under the effect of an elastic return element (20).

3. The aircraft door as claimed in either of the preceding claims, **characterized in that** the engaging pawl (15) comprises a head (17) which has a rounded profile and which is designed to cooperate with the lug (22) according to a linear connection.

4. The aircraft door as claimed in one of the preceding claims, **characterized in that** the engaging pawl (15) is mounted so as to pivot directly on the external opening/closing lever (7).

5. The aircraft door as claimed in one of the preceding claims, **characterized in that** the engaging mechanism (12) comprises an engaging ring (14) that rotates as one with the internal opening/closing lever (9), the lug (22) and the counter-stop (23) each being formed by a step made on the engaging ring (14).

6. The aircraft door as claimed in claim 5, **characterized in that**: it comprises an opening/closing mechanism (5) controlled by the rotation of a control shaft (6) about its longitudinal axis, the internal opening/closing lever (9) rotating as one with the control shaft (6); and **in that** the engaging ring (14) rotates as one with the control shaft (6).

7. The aircraft door as claimed in claim 6, **characterized in that** the external opening/closing lever (7) is mounted in a pivot connection about the control shaft (6).

8. The aircraft door as claimed in one of claims 4 to 7, **characterized in that** the stop (24) is formed on the external opening/closing lever (7), facing the counter-stop (23).

9. The aircraft door as claimed in one of claims 1 to 3, **characterized in that** the engaging pawl (15) is mounted so as to pivot on an element that rotates as one with the external opening/closing lever (7).

10. The aircraft door as claimed in claim 9, **characterized in that** the engaging mechanism (12) comprises an engaging ring (30) that rotates as one with the external opening/closing lever (7), the stop (24) being formed on the engaging ring (30) by a step made on the engaging ring (30).

11. The aircraft door as claimed in claim 10, **characterized in that** the engaging pawl (15) is in a pivot connection with the engaging ring (30).

12. The aircraft door as claimed in one of claims 10 to 11, **characterized in that**: it comprises an opening/closing mechanism (5) controlled by the rotation of a control shaft (6) about its longitudinal axis, the internal opening/closing lever (9) rotating as one with the control shaft (6); and **in that** the engaging mechanism (12) comprises an engaging shaft (26) whose axis of rotation is parallel to the axis of the control shaft (6), the engaging ring (30) rotating as one with the engaging shaft (30).

13. The aircraft door as claimed in claim 12, **characterized in that** the external opening/closing lever (7) rotates as one with the engaging shaft (30).

14. The aircraft door as claimed in one of claims 9 to 13, **characterized in that** the counter-stop (23) is fixed to the internal opening/closing lever (9).

15. The aircraft door as claimed in one of claims 9 to 14, **characterized in that** it comprises an airtight chamber (27) of the external opening/closing lever (7), the engaging mechanism (12) being situated on the internal face of the aircraft door, outside the airtight chamber (27).
